# EUROPEAN PATENT APPLICATION

(11) **EP 1 667 164 A1**
(43) Date of publication of application: **07.06.2006**
(21) Application number: 04747379.8
(22) Date of filing: 12.07.2004
(51) Int. Cl.: G12B 21/08, G01N 13/16

(54) **PROBE FOR SCANNNING PROBE MICROSCOPE AND METHOD OF PRODUCING THE SAME**

(30) Priority: 16.07.2003 JP 2003275200
(71) Applicant: Japan Science and Technology Agency, Kawaguchi-shi, Saitama 332-0012 (JP)
(72) Inventor: KOBAYASHI, Dai, Tokyo 157-0061 (JP); KAWAKATSU, Hideki, 1580086 (JP)
(74) Representative: Hoarton, Lloyd Douglas Charles
(86) International application number: PCT/JP2004/009911
(87) International publication number: WO 2005/020243

(57) **Abstract**

A probe for a scanning probe microscope and a method for fabricating the probe is provided that can perform accurate measurement without a base of a cantilever having contact with an object to be measured and without the object being hidden by the base of the probe. The probe for a scanning probe microscope includes a base, a support cantilever (21, 31) horizontally extending from the base, and a measuring cantilever (22, 32) provided at the top end of the support cantilever (21, 31) and having a length less than or equal to 20 micrometers and a thickness less than or equal to 1 micrometer.

## Description

### Technical Field

The present invention relates to a structure of a probe for a scanning probe microscope including a small cantilever capable of detecting a displacement and a velocity from a back surface of a substrate by an optical means, and also relates to a method for fabricating the probe.

### Background Art

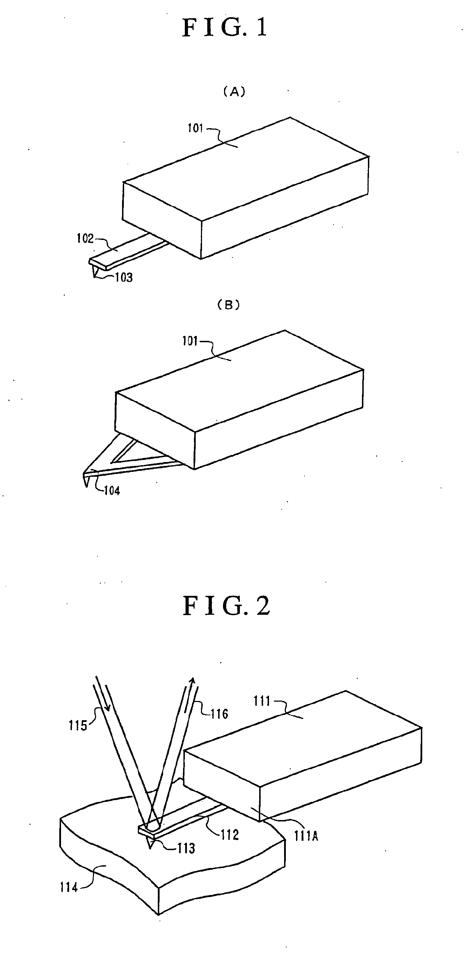

Fig. 1 is a perspective view of the structure of a probe for a known scanning probe microscope, where Fig. 1(A) is a perspective view illustrating the structure of a known probe for a scanning probe microscope according to a first embodiment and Fig. 1(B) is a perspective view illustrating the structure of a known probe for a scanning probe microscope according to a second embodiment.

As shown in Fig. 1(A), the probe includes a single beam cantilever 102 extending from a base (substrate) 101. A probe tip 103 suitable for an object to be measured and a measurement method is attached to the top end of the cantilever 102 as needed. In general, a material for the base '101 is silicon. Typically, the base 101 has a width of about 1.6 millimeters and a length of about 3.4 millimeters. The cantilever 102 is formed from a variety of materials, such as silicon, silicon nitride, or those covered with an evaporated metal. As shown in Fig. 1(B), a beam cantilever 104 having a variety of shapes, such as a triangular shape, is applied as needed. Typically, the cantilever 102 or 104 has a length of 100 micrometers to several 100 micrometers.

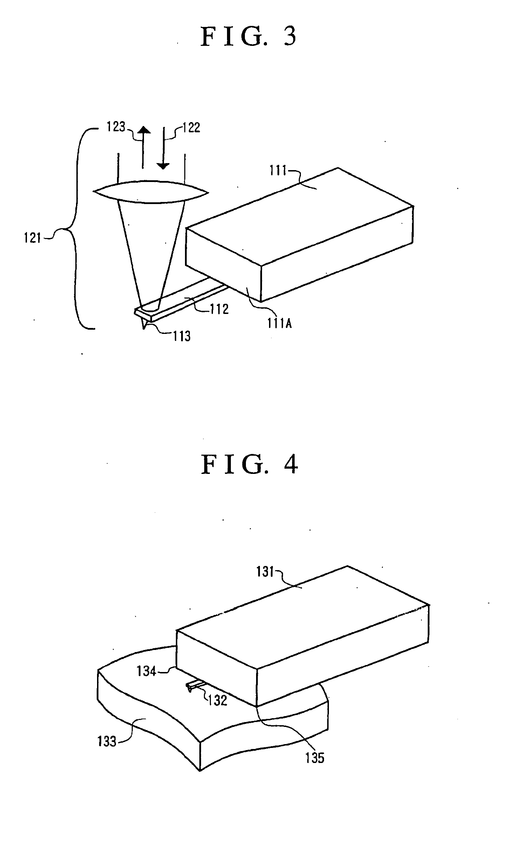

Figs. 2 and 3 illustrate how the probe for a known scanning probe microscope is typically used.

In the drawings, a base 111 is mounted to a scanning apparatus (not shown) including a piezoelectric device. A probe tip 113 of a cantilever 112 scans a surface of an object to be measured 114 such that the cantilever 112 traces the surface. The scanning probe microscope detects the deformation of the cantilever 112 caused by interaction between the probe tip 113 and the object to be measured 114, such as an atomic force or a magnetic force, so that the topography or magnetization of the object to be measured 114 may be visualized using computer graphics. In general, the scanning probe microscope detects the deformation of the cantilever 112 by optical means.

As shown in Fig. 2, in the case of employing the optical means including an optical lever, a laser beam 115 is reflected off the back surface of the cantilever 112 and the angle of a reflected beam 116 is detected by a photo diode. In contrast, as shown in Fig. 3, in the case of employing the optical means including an optical interferometer, an incident beam 122 and an output beam 123 travel along the same optical path.

In either case, in order to prevent a beam reflected off the back surface of the cantilever 112 from being blocked by an end 111A of the base 111, the cantilever 112 protrudes outwards from the base 111 instead of being located on the base 111.

The known probes are discussed in the following patent documents 1 to 4:
Patent Document 1: Japanese Unexamined Patent Application Publication No. 5-66127 (pages 4 to 5 and Fig. 1),
Patent Document 2: Japanese Unexamined Patent Application Publication No. 9-105755 (pages 4 to 5 and Fig. 1),
Patent Document 3: Japanese Unexamined Patent Application Publication No. 10-90287 (pages 3 to 4 and Fig. 1), and
Patent Document 4: Japanese Unexamined Patent Application Publication No. 10-221354 (pages 3 to 5 and Fig. 1).

### Disclosure of Invention

However, the structure of these known probes causes a problem when the cantilever becomes small.

In an operating mode known as a non-contact mode of a scanning probe microscope used for finding a force between an object to be measured and the cantilever from a change in the natural frequency of the cantilever, reducing the size of a cantilever facilitates the speed-up of measurement and the detection of a small force.

Fig. 4 is a perspective view of a known probe, in which only the dimensions of a cantilever is reduced.

As shown in Fig. 4, since a base 131 is used to attach a probe onto a main body of a microscope, the dimensions of the base 131 remain substantially constant regardless of the dimensions of the cantilever (an oscillator). As described above, each side of the base 131 ranges from 1 millimeter to a few millimeters. By contrast, if the length of a miniaturized cantilever 132 is, for example, 10 micrometers and if the degree of parallelization between the base 131 and an object to be measured 133 is not precisely controlled, a corner 134 or 135 of a front edge of the base 131 are brought into contact with the object to be measured 133 before the miniaturized cantilever 132 reaches the object 133.

In addition, since most part of the object to be measured 133 is hidden by the base 131 and cannot be observed, it is difficult to determine the position with which the miniaturized cantilever 132 is to be brought into contact.

Accordingly, it is an object of the present invention to provide a probe for a scanning probe microscope and a method of fabricating the probe capable of accurately measuring an object without the base of a cantilever being brought into contact with the object to be measured and without the object being hidden by the base of the cantilever.

To achieve the above-described object, the present invention is characterized in that:
(1) A probe for a scanning probe microscope includes a base of the probe for the scanning probe microscope, a support cantilever extending horizontally from the base, and a measuring cantilever which is disposed on the top end of the support cantilever and which has a length less than or equal to 20 micrometers and a thickness less than or equal to 1 micrometer;
(2) In the probe for a scanning probe microscope described in (1), the base and the support cantilever are formed from single-crystal silicon, the measuring cantilever is formed from a single-crystal silicon thin film, and the measuring cantilever is coupled with the top end of the support cantilever;
(3) In the probe for a scanning probe microscope described in (1), the top end of the support cantilever is processed to have a sloped surface so that the top end of the support cantilever does not prevent the measuring cantilever from being optically observed;
(4) In the probe for a scanning probe microscope described in (1), the thickness of the measuring cantilever is less than the thickness of the coupling portion between the measuring cantilever and the support cantilever so that the length of the measuring cantilever is precisely determined;
(5) In the probe for a scanning probe microscope described in (1), the width of the measuring cantilever is less than the width of the coupling portion between the measuring cantilever and the support cantilever so that the length of the measuring cantilever is precisely determined;
(6) In a method for fabricating the probe for a scanning probe microscope described in (2), the base and the support cantilever are formed by processing a single-crystal silicon substrate, the measuring cantilever is formed by processing a single-crystal silicon thin film of an SOI substrate different from the single-crystal silicon substrate, the support cantilever is bonded with the measuring cantilever, and a handling wafer and a buried oxide film are removed from the SOI substrate;
(7) In the method for fabricating the probe for a scanning probe microscope described in (6), a probe tip is formed at the top end of the measuring cantilever by means of wet etching.

### Brief Description of the Drawings

Fig. 1 is a perspective view of the structure of a probe for a known scanning probe microscope;
Fig. 2 illustrates how the probe for the known scanning probe microscope is typically used (in a first case);
Fig. 3 illustrates how the probe for the known scanning probe microscope is typically used (in a second case);
Fig. 4 is a perspective view of a known probe, in which only the dimensions of a cantilever are reduced;
Fig. 5 is a perspective view of a probe for a scanning probe microscope defined by Claim 1 of the present invention;
Fig. 6 is a perspective view of a probe for a scanning probe microscope defined by Claim 3 of the present invention;
Fig. 7 is a perspective view of the top end of a support cantilever of a probe defined by Claim 4 of the present invention;
Fig. 8 is a perspective view of the top end of a support cantilever of a probe defined by Claim 5 of the present invention;
Fig. 9 illustrates an example of a fabrication process of a base of a probe and a support cantilever of a scanning probe microscope according to the present invention;
Fig. 10 illustrates an example of a fabrication process of a measuring cantilever according to the present invention;
Fig. 11 illustrates a fabrication process of a support cantilever and a measuring cantilever according to the present invention;
Fig. 12 illustrates a probe fabricated using a method defined by Claim 7 of the present invention; and
Fig. 13 illustrates a fabrication process of a probe fabricated using the method defined by Claim 7 of the present invention.

### Best Mode for Carrying Out the Invention

The present invention can provide the following advantages:
(A) A probe having a structure in which a miniaturized measuring cantilever is provided to the top end of a support cantilever, as disclosed in Claim 1, facilitates observation of an object to be measured and efficiently prevents a base from being brought into contact with the object;
(B) A probe including a base and a support cantilever formed from a single-crystal silicon and a measuring cantilever formed from a single-crystal silicon thin film, as disclosed in Claim 2, can provide a high Q value of vibration, in particular, in a non-contact mode AFM in which the measuring cantilever is vibrated;
(C) A probe having a sloped top end of a support cantilever, as disclosed in Claim 3, can prevent the top end of the support cantilever from blocking a light beam when a measuring cantilever is optically observed;
(D) A probe in which the length of a measuring cantilever is determined by the length of a portion that is thinner, as disclosed in Claim 4, can precisely set the length of the measuring cantilever regardless of the alignment precision between the measuring cantilever and a support cantilever;
(E) A probe in which the length of a measuring cantilever is determined by the length of a portion whose width is decreased, as disclosed in Claim 5, can precisely set the length of the measuring cantilever regardless of the alignment precision between the measuring cantilever and a support cantilever;
(F) A method for fabricating a probe in which a support cantilever and a measuring cantilever are fabricated from different substrates and subsequently are coupled with each other, as disclosed in Claim 6, facilitates a process to form a complicated shape on the substrates as compared with a method in which a probe is fabricated without using a coupling process, thereby providing a high manufacturing yield;
(G) A method for fabricating a probe tip in which the probe tip is fabricated by means of wet etching, as disclosed in Claim 7, provides a high consistency with the fabrication method disclosed in Claim 6 and can provide a probe tip having a small curvature radius by using the crystal anisotropy regardless of the precision of a lithographic process.

The present invention provides a probe for a scanning probe microscope including a base of the probe, a support cantilever extending horizontally from the base, and a measuring cantilever which is disposed on the top end of the support cantilever and which has a length less than or equal to 20 micrometers and a thickness less than or equal to 1 micrometer.

### First Embodiment

Embodiments of the present invention are now herein described in detail.

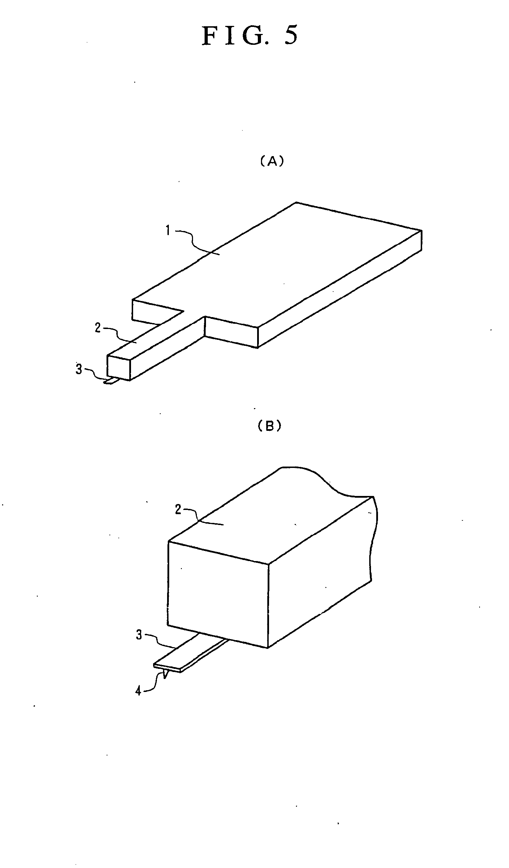

Fig. 5 is a perspective view of a probe for a probe microscope described in Claim 1 of the present invention, where Fig. 5(A) is a perspective view of an entire probe for a probe microscope and Fig. 5(B) is an enlarged view of the top end of a support cantilever of the probe.

As shown in these drawings, a support cantilever 2 extends from a base 1. A measuring cantilever 3 is mounted on the top end of the support cantilever 2. A probe tip 4 is provided on the top end of the measuring cantilever 3 as needed.

A probe as defined in Claim 2 includes the base 1 and the support cantilever 2 formed from single-crystal silicon and the measuring cantilever 3 formed from a single-crystal silicon thin film.

This structure can provide a high Q value of vibration of a measuring cantilever in a non-contact mode AFM (atomic force microscopy) in which the measuring cantilever is used while being vibrated.

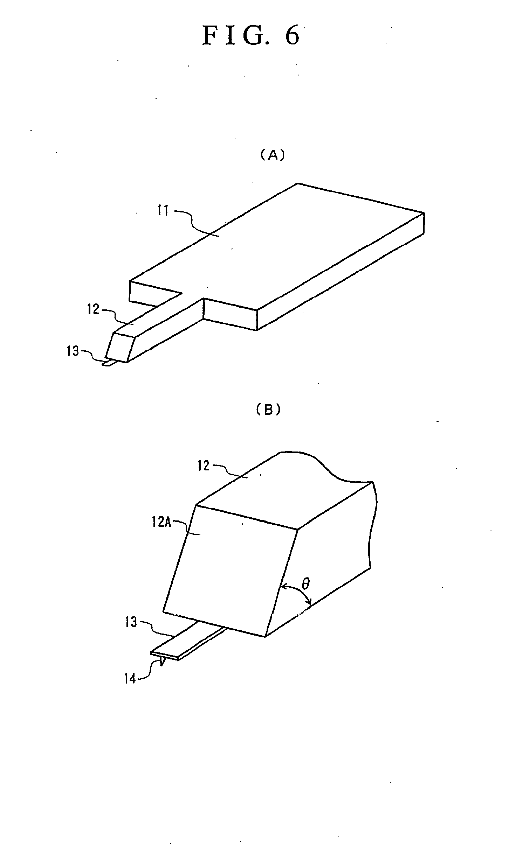

Fig. 6 is a perspective view of a probe for a probe microscope defined in Claim 3 of the present invention, where Fig. 6(A) is a perspective view of an entire probe for a probe microscope and Fig. 6(B) is an enlarged view of the top end of a support cantilever of the probe.

As shown in these drawings, a support cantilever 12 extends from a base 11. In order to prevent a light beam from being blocked by the support cantilever 12 when a measuring cantilever 13 coupled with the top end of the support cantilever 12 is optically observed, a sloped surface 12A is formed on the top end of the support, cantilever 12. Additionally, a slope angle θ of the sloped surface 12A is an acute angle.

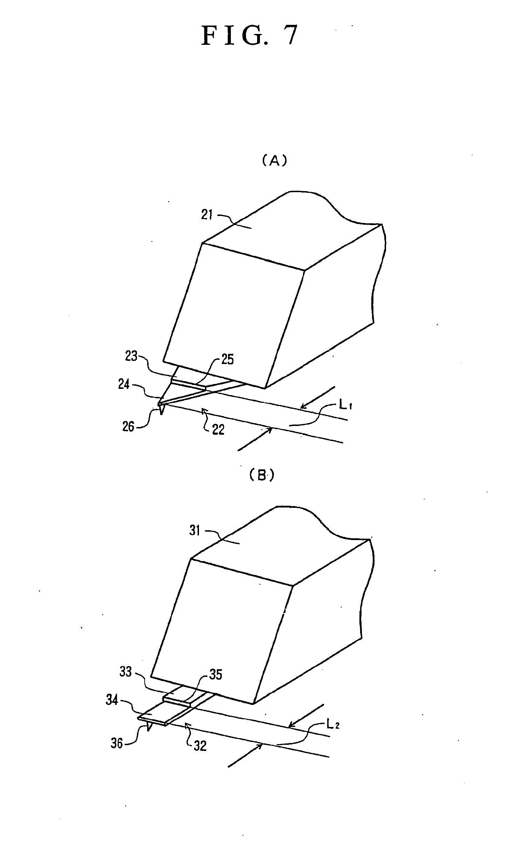

Fig. 7 is a perspective view of the top end of a support cantilever of a probe defined by Claim 4 of the present invention, where Fig. 7(A) is a perspective view of a first embodiment in which a measuring cantilever has a triangular shape and Fig. 7(B) is a perspective view of a second embodiment in which a measuring cantilever has a rectangular shape.

In Fig. 7(A), reference numeral 21 denotes a support cantilever and reference numeral 22 denotes a measuring cantilever. The measuring cantilever 22 forms a flat triangular shape as a whole. Reference numeral 23 denotes a base portion of the measuring cantilever 22, reference numeral 24 denotes the front portion of the measuring cantilever 22, reference numeral 25 denotes a stepped portion of the measuring cantilever 22 in the thickness direction, and reference numeral 26 denotes a probe tip. Here, provided are a base (not shown) of the probe for a probe microscope, the support cantilever 21 extending horizontally from the base, and the measuring cantilever 22 which is coupled with the top end of the support cantilever 21 and which has a length less than or equal to 20 micrometers and a thickness of less than or equal to 1 micrometer.

The front portion 24 of the measuring cantilever 22 functions as a measuring unit whose deformation is observed when scanning an object. The stepped portion 25 is formed at the border between the base portion 23 and the front portion 24 in the thickness direction so that the thickness of the front portion 24 is less than that of the base portion 23. Here, L₁ represents the set length of the front portion 24 of the measuring cantilever 22.

In Fig. 7(B), reference numeral 31 denotes a support cantilever and reference numeral 32 denotes a measuring cantilever. The measuring cantilever 32 forms a flat rectangular shape as a whole. Reference numeral 33 denotes a base portion of the measuring cantilever 32, reference numeral 34 denotes the front portion of the measuring cantilever 32, reference numeral 35 denotes a stepped portion of the measuring cantilever 32 in the thickness direction, and reference numeral 36 denotes a probe tip. As in Fig. 7(A), a base of the support cantilever 31 is not shown here.

The front portion 34 of the measuring cantilever 32 functions as a measuring unit whose deformation is observed when scanning an object. The stepped portion 35 is formed at the border between the base portion 33 and the front portion 34 in the thickness direction so that the thickness of the front portion 34 is less than that of the base portion 33. Here, L₂ represents the set length of the front portion 34 of the measuring cantilever 32.

In the probes having such structures, the length of the measuring cantilever can be defined as a length of the portion having a thinner thickness. Accordingly, the length of the measuring cantilever can be precisely set regardless of the alignment precision between the measuring cantilever and the support cantilever.

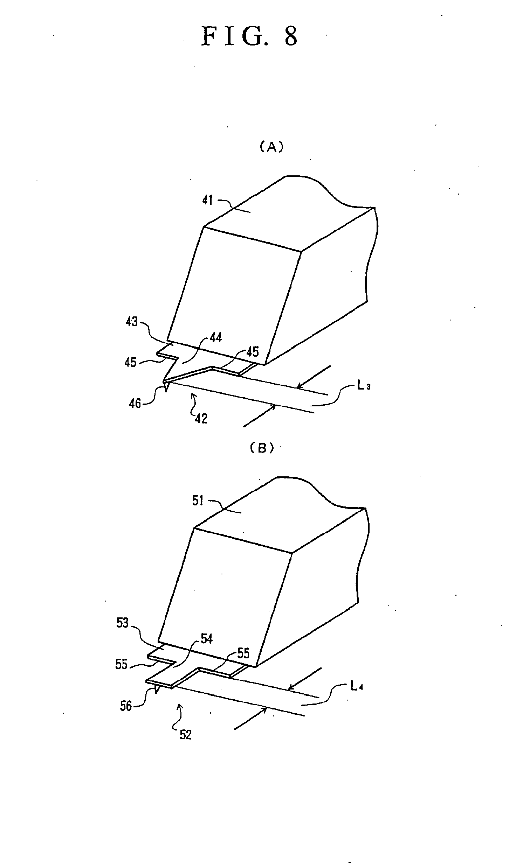

Fig. 8 is a perspective view of the top end of a support cantilever of a probe defined by Claim 5 of the present invention, where Fig. 8(A) is a perspective view of a first embodiment in which a front portion of a measuring cantilever has a triangular shape and Fig. 8(B) is a perspective view of a second embodiment in which a front portion of a measuring cantilever has a rectangular shape.

In Fig. 8(A), reference numeral 41 denotes a support cantilever and reference numeral 42 denotes a measuring cantilever. Reference numeral 43 denotes a base portion of the measuring cantilever 42 and reference numeral 44 denotes the front portion of the measuring cantilever 42. The front portion 44 has a flat triangular shape having a sharp top end. Reference numeral 45 denotes a stepped portion in the width direction formed at a border between the base portion 43 and the front portion 44. Reference numeral 46 denotes a probe tip. A base of the support cantilever 41 is also not shown here.

Here, provided are a base (not shown) of the probe for a probe microscope, the support cantilever 41 extending horizontally from the base, and the measuring cantilever 42 which is coupled with the top end of the support cantilever 41 and which has a length less than or equal to 20 micrometers and a thickness of less than or equal to 1 micrometer.

The front portion 44 of the measuring cantilever 42 functions as a measuring unit whose deformation is observed when scanning an object. The stepped portion 45 is formed at the border between the base portion 43 and the front portion 44 in the width direction so that the width of the front portion 44 is less than that of the base portion 43. Here, L₃ represents the set length of the front portion 44 of the measuring cantilever 42.

In Fig. 8(B), reference numeral 51 denotes a support cantilever and reference numeral 52 denotes a measuring cantilever. Reference numeral. 53 denotes a base portion of the measuring cantilever 52 and reference numeral 54 denotes the front portion of the measuring cantilever 52. The front portion 54 has a flat rectangular shape. Reference numeral 55 denotes a stepped portion in the width direction. Reference numeral 56 denotes a probe tip. A base of the support cantilever 51 is also not shown here.

Here, provided are a base (not shown) of the probe for a probe microscope, the support cantilever 51 extending horizontally from the base, and the measuring cantilever 52 which is coupled with the top end of the support cantilever 51 and which has a length less than or equal to 20 micrometers and a thickness of less than or equal to 1 micrometer.

The front portion 54 of the measuring cantilever 52 functions as a measuring unit whose deformation is observed when scanning an object. The stepped portion 55 is formed at the border between the base portion 53 and the front portion 54 in the width direction so that the width of the front portion 54 is less than that of the base portion 53. Here, L₄ represents the set length of the front portion 54 of the measuring cantilever 52.

In the probes having such structures, the length of the measuring cantilever can be defined as a length of the portion having a short width. Accordingly, the length of the measuring cantilever can be precisely set regardless of the alignment precision between the measuring cantilever and the support cantilever.

In particular, for the probes shown in Figs. 7 and 8, when the measuring cantilever is coupled with the support cantilever, the strict alignment precision is not required. Thus, these probes are effective for this case.

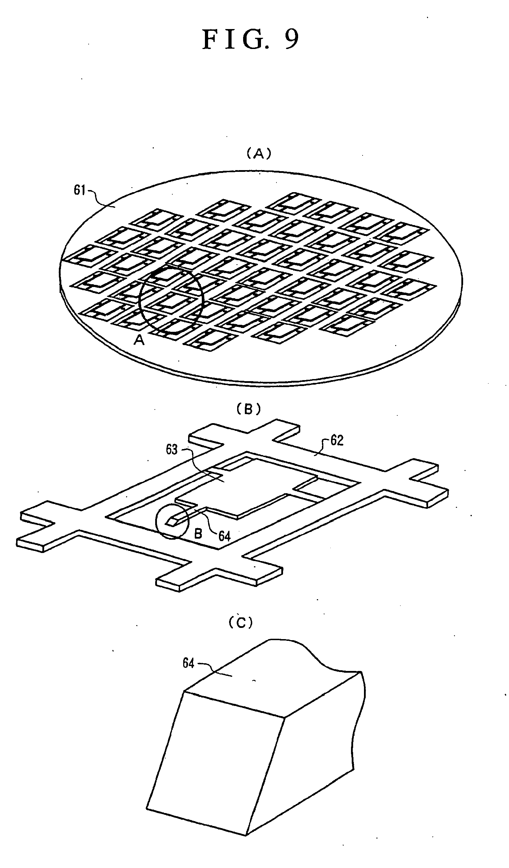

A method for fabricating a probe defined by Claim 6 is now herein described with reference to Figs. 9, 10, and 11.

Fig. 9 illustrates an example of a fabrication process of a base of a probe and a support cantilever of a probe microscope according to the present invention, where Fig. 9(A) is an overall perspective view, Fig. 9(B) is an enlarged view of an area A shown in Fig. 9(A), and Fig. 9(C) is an enlarged view of an area B shown in Fig. 9(B).

Here, a base 63 and a support cantilever 64 are fabricated while being supported by a frame 62 formed by processing a single-crystal silicon substrate 61. Although, in Fig. 9, a plurality of the bases 63 is supported by the frame 62 of the single-crystal silicon substrate 61, the numbers of the bases 63 and the support cantilevers 64 processed at a time and the manner for supporting the bases 63 and the support cantilevers 64 are not limited to those shown in Fig. 9.

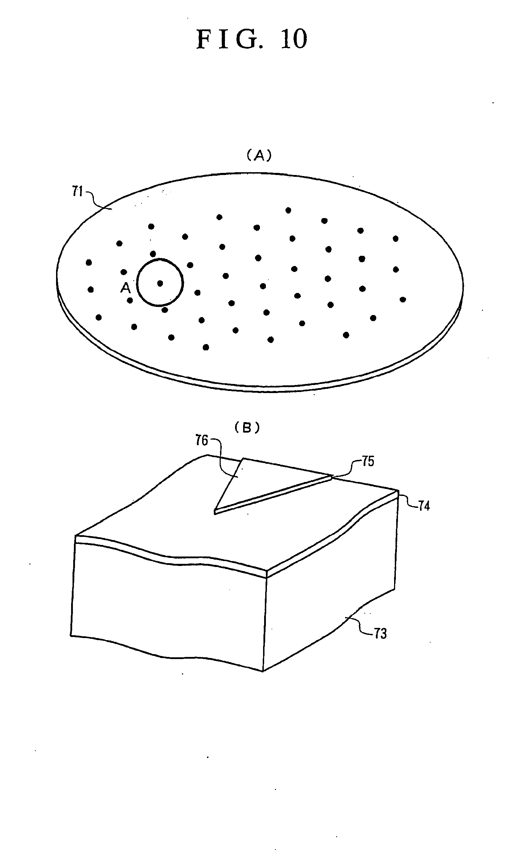

Fig. 10 illustrates an example of a fabrication process of a measuring cantilever according to the present invention, where Fig. 10(A) is an overall perspective view, Fig. 10(B) is an enlarged view of an area A shown in Fig. 10(A).

As shown in Fig. 10, a measuring cantilever 76 is fabricated by processing a single-crystal silicon thin film 75 of an SOI substrate 71. Here, the measuring cantilever 76 has a triangular shape. However, the shape of the measuring cantilever is not limited to a triangular shape. In Fig. 10(B), reference numerals 74 and 73 denote a buried oxide film of the SOI substrate 71 and a handling wafer, respectively.

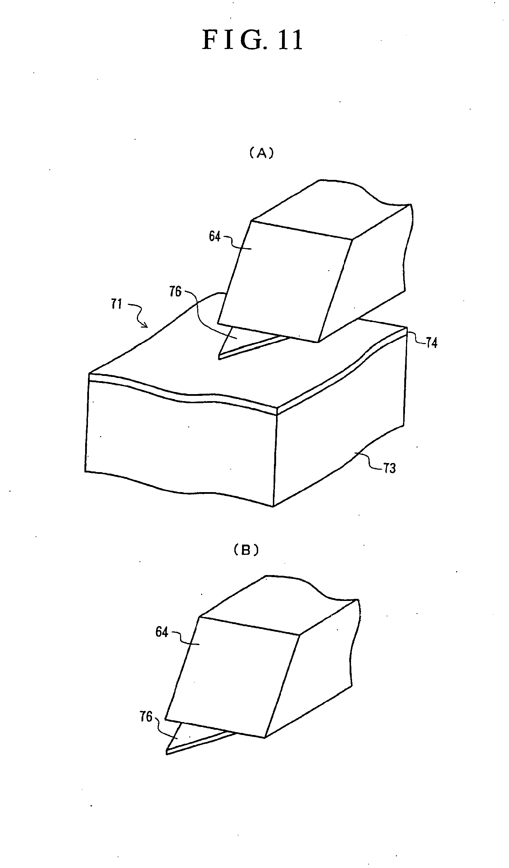

Fig. 11 illustrates a fabrication process of a support cantilever and a measuring cantilever according to the present invention, where Fig. 11(A) illustrates a coupling process of the support cantilever and the measuring cantilever and Fig. 11(B) is an enlarged view of the top end of a fabricated probe.

The SOI substrate 71 in which the measuring cantilever 76 shown in Fig. 10 is formed is turned over (not shown in Fig. 10). Thereafter, the SOI substrate 71 is bonded with the silicon substrate 61 in which the base 63 and the support cantilever 64 shown in Fig. 9 are formed.

As a result, as shown in Fig. 11(A), the measuring cantilever 76 is coupled with the top end of the support cantilever 64.

Subsequently, the handling wafer 73 and the buried oxide film 74 of the SOI substrate 71 are removed, and a probe is fabricated. Fig. 11(B) is an enlarged view of a top end of the support cantilever of the fabricated probe.

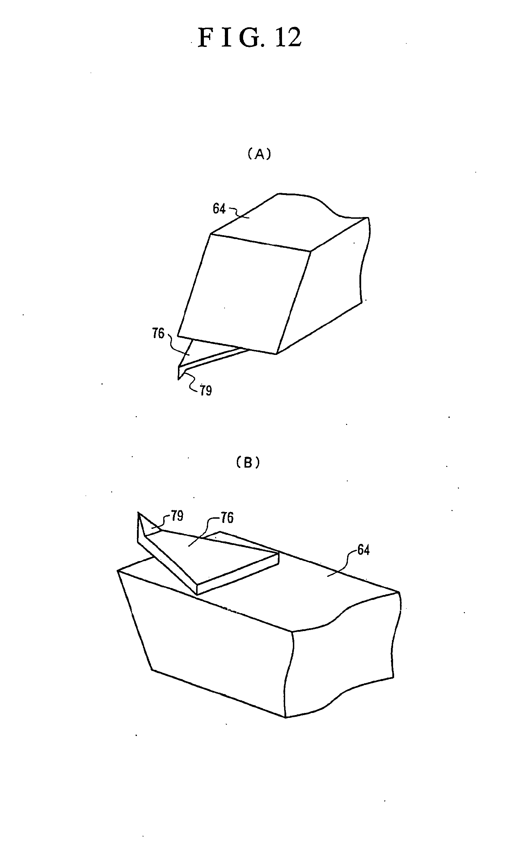

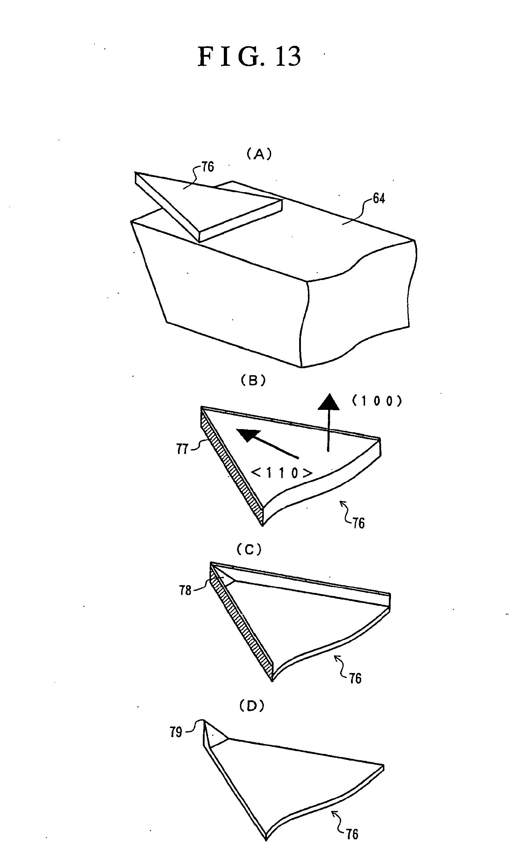

Fig. 12 illustrates a probe fabricated using a method defined by Claim 7 of the present invention, where Fig. 12(A) is a perspective view of a top end of the support cantilever of the probe and Fig. 12(B) is a back perspective view of the top end of the support cantilever of the probe. Fig. 13 illustrates a fabrication process of a probe using the method defined by Claim 7 of the present invention, where Fig. 13(A) illustrates the top end of the support cantilever 64 shown in Fig. 11(B) viewed from the back and Figs. 13(B)-(D) illustrate a fabrication process of a probe tip 79 by enlarging the top end of the measuring cantilever 76.

In these drawings, reference numeral 64 denotes a support cantilever, reference numeral 76 denotes a measuring cantilever, reference numeral 77 denotes a silicon oxide film or a silicon nitride film, reference numeral 78 denotes a sloped surface, and reference numeral 79 denotes a probe tip.

Here, the surface orientation of the measuring cantilever 76 must be a surface (100). Also, the longitudinal axis of the measuring cantilever 76 must be oriented towards an orientation <110>. As shown in Fig. 13(B), the side surface and the back surface of the measuring cantilever 76 are covered by a silicon oxide film or silicon nitride film 77. However, the top surface of the measuring cantilever 76 must not be covered by the silicon oxide film or silicon nitride film 77. This silicon oxide film or a silicon nitride film 77 can be formed in a variety of ways. For example, in a stage shown in Fig. 11(A), a nitride film is formed over the entire surface. If a chemical that does not dissolve the nitride film is used when the handling wafer 73 and the buried oxide film 74 of SOI substrate 71 are removed, the side surface and the back surface of the measuring cantilever 76 are covered by the silicon nitride film 77 in a stage shown in Fig. 11(B) without any further processing.

Subsequently, in a stage shown in Fig. 13(C), the measuring cantilever 76 is wet-etched by an alkaline aqueous solution so that the thickness of the measuring cantilever 76 is reduced. The sloped surface 78 with a front edge is formed in a surface (111) because of slow etching speed therein. Finally, in a stage shown in Fig. 13(D), the silicon oxide film or silicon nitride film 77 is removed so as to achieve the probe tip 79.

Although the invention has been shown and described with reference to the foregoing embodiments, various modifications may be made without departing from the spirit and scope of the invention and these modifications should not be excluded from the spirit and scope of the invention. Industrial Applicability

According to the present invention, a probe for a scanning probe microscope is provided that can precisely measure the deformation of a cantilever caused by interaction between a probe tip and an object to be measured, such as an atomic force or a magnetic force, and that can provide a fine and precise measurement.

## Claims

1. A probe for a scanning probe microscope, comprising:
(a) a base of the probe for the probe microscope;
(b) a support cantilever extending horizontally from the base; and
(c) a measuring cantilever provided on the top end of the support cantilever, the measuring cantilever having a length less than or equal to 20 micrometers and a thickness less than or equal to 1 micrometer.

2. The probe for a scanning probe microscope according to Claim 1, wherein the base and the support cantilever are formed from single-crystal silicon and the measuring cantilever is formed from a single-crystal silicon thin film, and wherein the measuring cantilever is coupled with the top end of the support cantilever.

3. The probe for a scanning probe microscope according to Claim 1, wherein the top end of the support cantilever is processed to have a sloped surface so as not to prevent the measuring cantilever from being optically observed.

4. The probe for a scanning probe microscope according to Claim 1, wherein the length of the measuring cantilever is precisely defined by reducing the thickness of the measuring cantilever to less than the thickness of a coupling portion between the measuring cantilever and the support cantilever.

5. The probe for a scanning probe microscope according to Claim 1, wherein the length of the measuring cantilever is precisely defined by reducing the width of the measuring cantilever to less than the width of a coupling portion between the measuring cantilever and the support cantilever.

6. A method for fabricating the probe for a scanning probe microscope according to Claim 2, comprising the steps of:
fabricating the base and the support cantilever by processing a single-crystal silicon substrate;
fabricating the measuring cantilever by processing a single-crystal silicon thin film of an SOI substrate different from the single-crystal silicon substrate;
bonding the measuring cantilever with the support cantilever; and
removing a handling wafer and a buried oxide film of the SOI substrate.

7. The method for fabricating the probe for a scanning probe microscope according to Claim 6, further comprising the step of:
forming a probe tip on the top end of the measuring cantilever by means of wet etching.
